# EUROPÄISCHE PATENTANMELDUNG

(11) **EP 4 509 359 A1**
(43) Veröffentlichungstag der Anmeldung: **19.02.2025**
(21) Anmeldenummer: 24000098.4
(22) Anmeldetag: 14.08.2024
(51) Int. Cl.: B60P 3/36

(54) **INNENEINRICHTUNG FÜR TRANSPORTER**

(30) Priorität: 15.08.2023 DE 102023003367
(71) Anmelder: Hesse, Vera Maria, 32756 Detmold (DE)
(72) Erfinder: Hesse, Vera Maria, 32756 Detmold (DE)
(74) Vertreter: Rieke, Andreas

(57) **Zusammenfassung**

Reversible Inneneinrichtung für den Laderaum eines Transporters (1) für ein Umrüsten als Wohnmobil, aufweisend ein Gestell (4) von quer zu der Fahrzeuglängsachse sich erstreckenden, bogenförmigen Rippen (5-9), die in Fahrzeuglängsachse durch lösbare Stangen (10) verbunden sind.

## Beschreibung

Die Erfindung betrifft eine reversible Inneneinrichtung für den Laderaum eines Transporters.

Sogenannte Kleintransporter, mit einem zulässigen Gesamtgewicht von 3,5 Tonnen, angepasst an die Führerscheinklasse B, oder mit einem zulässigen Gesamtgewicht von 7,49 Tonnen, angepasst an die frühere Führerscheinklasse 3, sind in vielfältigen Ausführungsformen bekannt und bewährt. Hier in Rede steht ein solcher Transporter mit einem Kofferaufbau, vorzugsweise mit Hochdach, wie ihn jeder namenhafte Autohersteller in seinem Programm hat.

Diese Fahrzeuge dienen vielfach als Basis für Wohnmobile, deren Verwendung außer für das Reisen ausgesprochen eingeschränkt ist.

Vor diesem Hintergrund macht die Erfindung es sich zur Aufgabe, einen Transporter der Eingangs genannten Art reversibel als Wohnmobil auszurüsten, ohne die Transportfunktion des Fahrzeugs zu beeinträchtigen. So kann bspw. ein während der Betriebsferien nicht genutzter Transporter problemlos als Wohnmobil hergerichtet und verwendet werden.

Gelöst wird diese technische Problematik durch eine reversible Inneneinrichtung mit den Merkmalen des Anspruchs 1.

Der Auf- bzw. Abbau des Gestells erfolgt weitgehend ohne spezielle Werkzeuge und insbesondere ohne Eingriffe in die Fahrzeugstruktur. Das Gestell weist quer zu der Fahrzeuglängsachse sich erstreckende, bogenförmige Rippen oder Spanten auf. Ausgesteift sind die Rippen durch Stangen, die in Fahrzeuglängsachse lösbar mit den Rippen verbunden sind. Diese Stangen können aus Holz sein, jedoch werden Stangen aus einem Metall aufgrund der größeren Stabilität bevorzugt.

Die Rippen aus einem Holzwerkstoff, gegebenenfalls aus einem Kunststoff, sind zerlegbar.

In Einzelteile zerlegt können die Rippen platzsparend bei nicht Gebrauch aufbewahrt werden. Die Verbindungsmöglichkeiten der einzelnen Rippenteile sind vielfältig. Übliche Holzverbindungen wie Blatten oder Zinken, die durch Schrauben gesichert werden, sind möglich.

Die reversible Inneneinrichtung gilt als Ladung und das Gestell ist an fahrzeugseitigen Transportsicherungen festzulegen. Es kann weiter daran gedacht sein, dass die Rippen unmittelbar an fahrzeugbodenfesten Transportsicherungen festgelegt sind.

Insbesondere sind jedoch gesondert ausgebildete Schienen, bevorzugt aus Aluminium, auf dem Boden festgelegt, bspw. indem die Schienen und/oder die Rippen mit Zurrgurten an fahrzeugfesten Ösen für eine Transportsicherung festlegt sind.

Als zweckmäßig hat es sich erwiesen, dass Schienen einen rechteckigen Rahmen ausbilden, der dem getragenen Gestell erhebliche Stabilität und Bodenfestigkeit verleiht.

In konstruktiver Ausgestaltung ist dabei weiter vorgesehen, dass Schienen durch Laschen verbunden sind. Nach Entfernen solcher Laschen können die vereinzelten, kurzen Schienen platzsparend bei einem Nichtgebrauch gelagert werden.

Auch die Stangen sind nicht durchgängig ausgebildet, sondern erstrecken sich von Rippe zu Rippe. In konstruktiver Ausgestaltung ist dabei vorgesehen, dass die Stangen zumindest endseitig ein Gewinde aufweisen und einseitig mit einer Rippe oder mit einer Rippe und untereinander verschraubt sind. Dabei wird bevorzugt, dass die Stangen durch Rohre mit zumindest endseitigen Innengewinde ausgebildet sind. Mit der Verwendung von Kupferrohren erhält man ein attraktives Gestell.

In weiterer Ausgestaltung der Inneneinrichtung nach der Erfindung ist vorgesehen, dass benachbarte Rippen gleichartige, jeweils eine Auflage ausbildende Vorsprünge aufweisen. So kann beispielsweise in einfacher Weise ein Küchenblock mit Kochfeld und Spülbecken installiert werden.

Auch können zwischen den Vorsprüngen benachbarter Rippen bspw. in üblicher Weise Bretter als Ablage montiert werden. Eine elegante und leichte Alternative sind Stäbe in korrespondierenden Bohrungen.

Ist insbesondere daran gedacht, dass eine Sitzfläche ausgebildet wird, ist weiter bevorzugt, dass die benachbarten Rippen auch gegenüberliegende, gleichartig ausgebildete Vorsprünge aufweisen, insbesondere für gegenüber liegende Sitzbänke. Es kann dann der Zwischenraum zwischen den beiden Sitzbänken für die Ausbildung einer Liegefläche geschlossen werden.

Eine weitere Maßnahme sieht vor, dass die Rippen bis auf Aussparungen eine gleiche Außenkontur aufweisen. Dies weist fertigungstechnische Vorteile auf, da auf gleiche Schablonen zurückgegriffen werden kann. Nötige Aussparungen, beispielsweise für die Radkästen, können sodann problemlos in Abhängigkeit der Positionierung der Rippe in dem Laderaum noch eingebracht werden.

Eine zwischen den Fahrzeugwänden, dem Fahrzeugdach und dem Gestell angeordnete Hülle sorgte für ein wohnliches Ambiente.

Die Erfindung wird anhand der Zeichnung näher erläutert, in der lediglich ein Ausführungsbeispiel dargestellt ist. In der Zeichnung zeigt:
- Fig. 1: einen Längsschnitt entlang der Linie I, I in Figur 14,
- Fig. 2: einen Querschnitt entlang der Linie II, II in Figur 14,
- Fig. 3: eine erste Rippe,
- Fig. 4: eine in Fahrrichtung nachfolgende zweite Rippe,
- Fig. 5: eine dritte Rippe,
- Fig. 6: eine vierte Rippe,
- Fig. 7: eine fünfte Rippe,
- Fig. 8: in einer Draufsicht die an Schienen montierte Rippen,
- Fig. 9: das Festlegen eines Zurrgurtes an einer Schiene,
- Fig. 10: ein Anschlussstück für das Festlegen einer Rippe an einer Schiene,
- Fig. 11: das in eine Schiene eingebrachte Anschlussstück,
- Fig. 12: eine festgelegte Rippe,
- Fig. 13: eine Seitenansicht von links hinten gern, der Linie XIII,XIII in Fig. 14,
- Fig. 14: einen Schnitt entlang der Linie XIV in Figur 3,
- Fig. 15: eine Seitenansicht von rechts hinten gern, der Linie XV,XV in Fig. 14,
- Fig. 16: das Festlegen einer Stange an einer Rippe,
- Fig. 17: das Festlegen zweier Stangen und einer Rippe und
- Fig. 18: das Festlegen einer Platte an einem Lattenrost.

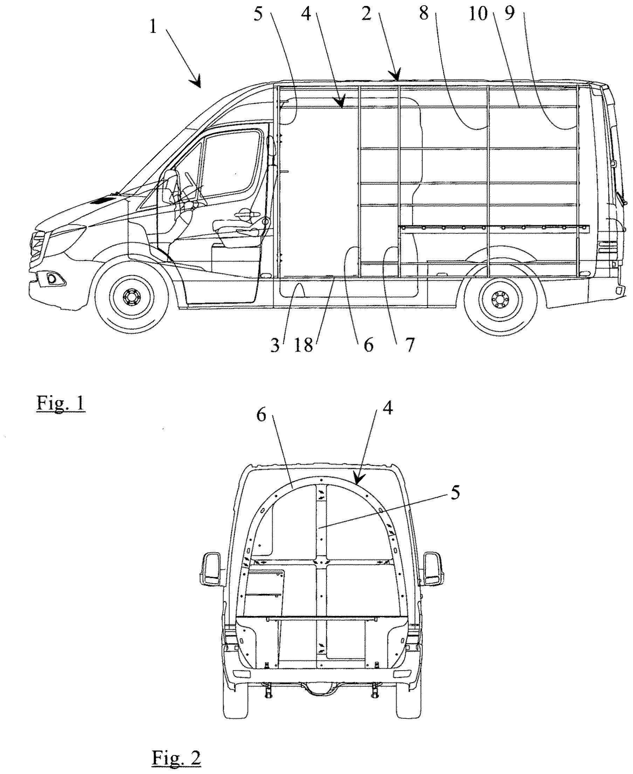

Die Figuren 1 und 2 zeigen einen herkömmlichen Kleintransporter 1 mit einem ein Hochdach aufweisenden Kofferaufbau 2. Wie üblich weist der Kofferaufbau 2 eine seitliche Türe 3 auf, zumeist eine Schiebetüre. Für den Umbau des Transporters 1 in ein Wohnmobil ist in dem Laderaum ein Gestell 4 aufgenommen.

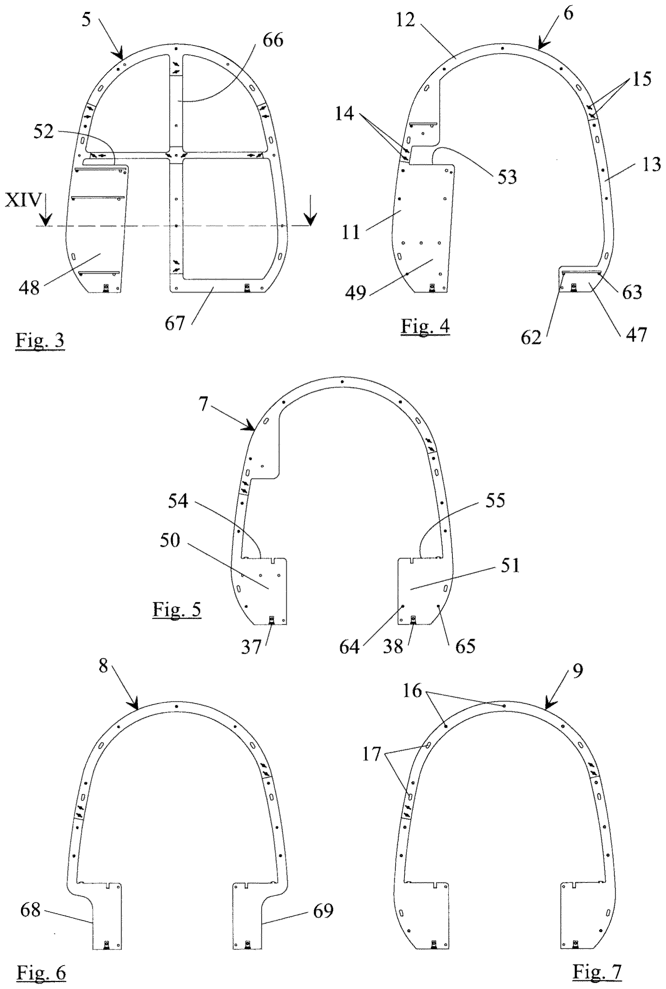

Die Länge des Gestells und damit die Anzahl der benötigten Rippen richtet sich nach der Länge des Laderaums. Bei dem Ausführungsbeispiel weist das Gestell 4 beispielhaft fünf Rippen 5-9 gern, den Figuren 3-7 auf. Die sich quer zu der Längserstreckung des Transporters 1 erstreckenden Rippen 5-9 sind durch eine Vielzahl von lösbaren Stangen 10 verbunden, die auf den Rippen 5-9 senkrecht stehen.

Die in den Figuren 3-7 wiedergegebenen Rippen 5-9 aus einem Holzwerkstoff sind für eine platzsparende Aufbewahrung bei nicht Gebrauch zerlegbar. So weist die Rippe 6 in Figur 4 drei Segmente 11-13 auf, die durch eine gerade Blattung verbunden sind. Jede Blattung ist durch eine zweifache Verschraubung 14,15 gesichert.

Die Rippen 5-9 weisen eine Vielzahl von in Fahrtrichtung fluchtenden Bohrungen 16 auf, die der Festlegung der Stangen 10 dienen. Weitere Durchbrechungen 17 dienen der Durchführung von Zurrgurten für ein Festlegen der Rippen 5-9 an fahrzeugfesten Ösen.

Ein unterseitiges Festlegen der Rippen 5-9 erfolgt an fahrzeugbodenfesten Schienen 18.

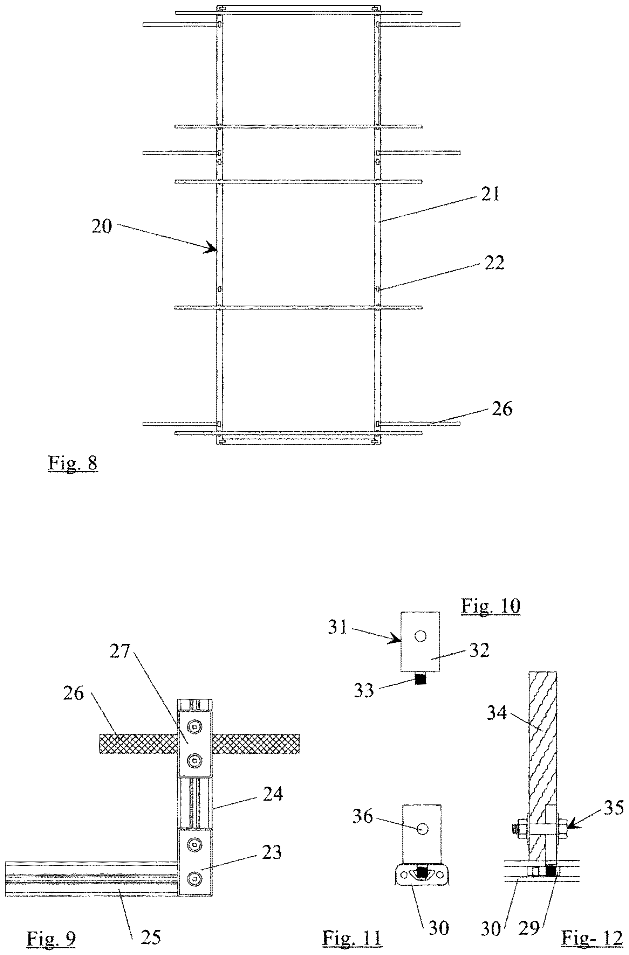

Figur 8 zeigt in einer Draufsicht einen Rahmen 20 aus einer Vielzahl von Schienen 21. Die Schienen 21 sind durch Laschen 22 miteinander verbunden, vergleiche Figur 9. Neben den dort durch eine Lasche 23 verbundenen Schienen 24,25 ist ein Zurrgurt 26 durch eine weitere Lasche 27 festgelegt.

Mit solchen Zurrgurten 26 kann der Rahmen 20 an Ladungssicherungselementen des Transporters 1 festgelegt werden.

Für das Festlegen der Rippen 5-9 an Schienen 30 dienen Verbindungsstücke 31, vergleiche Figuren 10-12. Das Verbindungsstück 31 weist einen quaderförmigen Grundkörper 32, dem unterseitig ein Gewindezapfen 33 vorsteht. Der Gewindezapfen 33 ist in der Schiene 30 in einem Nutenstein 29 festgelegt. Das Festlegen einer Rippe 34 folgt mit einer Schraubverbindung 35 durch eine Bohrung 36 in dem Grundkörper 32.

Die Verdrehsicherheit des Anschlusses der Rippe 34 wird durch einen versenkten Einbau des Grundkörpers 32 erhöht, wozu die Rippen 5-9 unterseitige Ausnehmungen 37,38 aufweisen, vergleiche Figur 5, mit denen auch die Schienen 30 übergriffen werden.

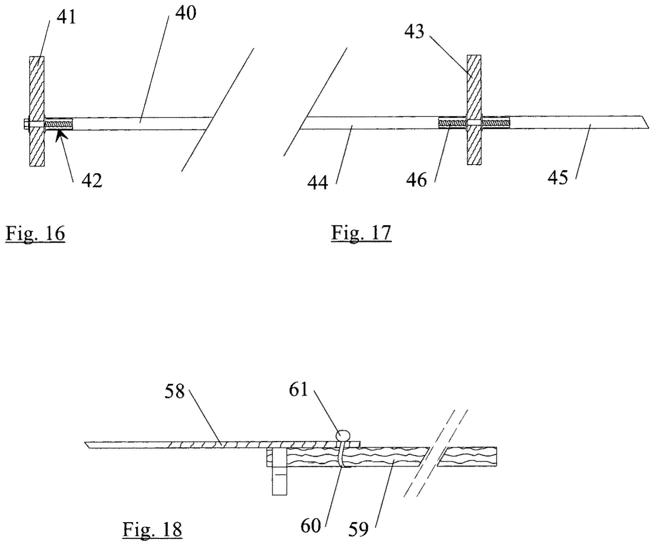

Die die Rippen verbindenden Stangen werden bei dem Ausführungsbeispiel durch Rohre ausgebildet. Figur 16 zeigt den Anschluss einer solchen Stange 40 an eine äußere Rippe 41. Die Stange 40 ist zumindest endseitig mit einem Innengewinde versehen, so dass die Festlegung durch eine einfache Verschraubung 42 erfolgen kann.

Dabei stützt sich die Stirnseite der Stange 40 über eine Unterlegscheibe auf der Rippe 41 ab.

Bei mittleren Rippen 43 werden die sich über Unterlegscheiben abstützenden Stangen 44,45 durch eine die Rippe 43 durchsetzende Gewindestange 46 verbunden.

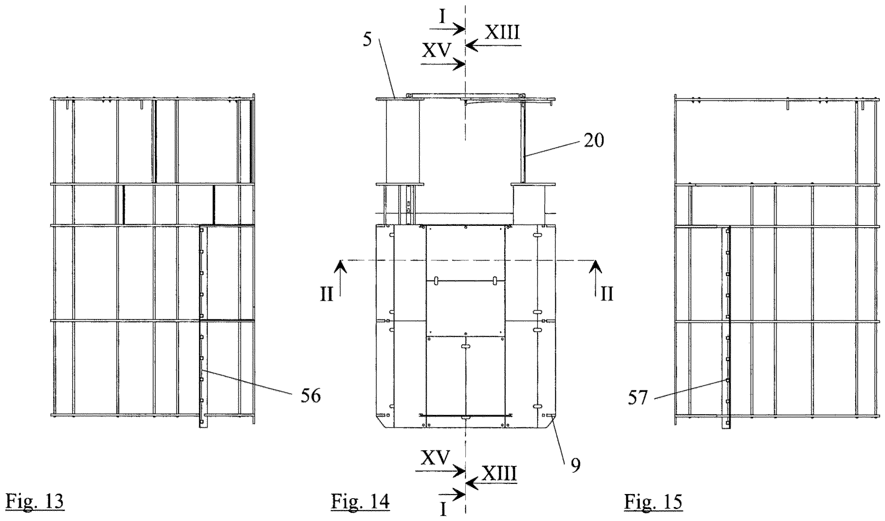

Für eine Innenraumgestaltung weisen die benachbarten Rippen 5,6 und die Rippen 7-9 in den Innenraum weisende Vorsprünge 48,49 bzw. 50,51 auf, die Auflagen 52,53 bzw. 54,55 ausbilden. Die Auflagen 52,53 können bspw. ein Brett als Arbeitsfläche, ein Regal oder einen Küchenblock tragen, während die Auflagen 54,55 Lattenroste 56,57, abstützen. Mit Polstern versehen werden so zwei gegenüberliegende Sitzbänke ausgebildet. Durch ein Schließen des Zwischenraumes zwischen den Sitzbänken entsteht dann eine Liegefläche zwischen den Rippen 2 und 9, vgl. Fig. 14.

Die Befestigung von bspw. Polstern tragenden Platten 58 auf einem Lattenrost 59 erfolgt mit Spanngummis 60, die mit einem Kugelkopf 61 versehen sind, vergleiche Figur 18.

Weiter können zwischen benachbarten Vorsprüngen 48-51 Bretter als Ablage festgelegt werden. Alternativ weisen die Vorsprünge 48-51 fluchtende Bohrungen auf, hier beispielhaft die Vorsprünge 47,51 der Rippen 6,7 mit fluchtenden Bohrungen 62-65, in die Stäbe eingesetzt werden.

Die Innenkontur der Rippen 5-9 wird so durch den Nutzen und die Verwendung vorgegeben. Abweichend von der offenen Innenkontur der Rippen 6-9 weist die Rippe 5 ein aussteifendes Kreuz 66 und ein Bodenelement 67 auf, wodurch diese äußere Rippe 5 des Gestells 4 äußerst stabil ist.

Dagegen ist die Außenkontur der Rippen 5-9 im Wesentlichen deckungsgleich. Hier sind lediglich in der Rippe 8 Aussparungen 68,69 für die Radkästen vorgesehen.

In der Zeichnung nicht dargestellt, ist die Maßnahme, dass zwischen dem Fahrzeugdach und dem Gestell eine Hülle angeordnet ist, insbesondere eine Stoffhülle.

### Bezugszeichenliste:

1. Kleintransporter
2. Kofferaufbau
3. Tür
4. Gestell
5. Rippe
6. Rippe
7. Rippe
8. Rippe
9. Rippe
10.Stange
11.Segment
12.Segment
13.Segment
14. Verschraubung
15. Verschraubung
16.Bohrung
17.Durchbrechung
18.Schiene
19.
20. Rahmen
21.Schiene
22.Lasche
23.Lasche
24.Schiene
25.Schiene
26.Zurrgurt
27.Lasche
28.
29.Nutenstein
30.Schiene
31. Verbindungsstück
32.Grundkörper
33. Gewindezapfen
34. Rippe
35.Schraubverbindung
36. Bohrung
37. Ausnehmung
38. Ausnehmung
39.
40.Stange
41. Rippe
42. Verschraubung
43.Rippe
44.Stange
45.Stange
46. Gewindestange
47.Vorsprung
48. Vorsprung
49.Vorsprung
50.Vorsprung
51. Vorsprung
52.Auflage
53.Auflage
54. Auflage
55. Auflage
56.Lattenrost
57.Lattenrost
58.Platte
59.Lattenrost
60. Spanngummi
61.Kugelkopf
62.Bohrung
63.Bohrung
64.Bohrung
65. Bohrung
66. Kreuz
67. Bodenelement
68.Aussparung
69. Aussparung

## Patentansprüche

1. Reversible Inneneinrichtung für den Laderaum eines Transporters (1), **gekennzeichnet durch** ein Gestell (4) von quer zu der Fahrzeuglängsachse sich erstreckenden, bogenförmigen Rippen (5-9), die in Fahrzeuglängsachse durch lösbare Stangen (10) verbunden sind.

2. Inneneinrichtung nach Anspruch 1, **dadurch gekennzeichnet, dass** die Rippen (5-9) zerlegbar sind.

3. Inneneinrichtung nach einem oder mehreren der vorangehenden Ansprüche, **dadurch gekennzeichnet, dass** die Rippen (5-9) an Schienen (18) auf dem Boden festgelegt sind.

4. Inneneinrichtung nach einem oder mehreren der vorangehenden Ansprüche, **dadurch gekennzeichnet, dass** die Schienen (18) und/oder die Rippen (5-9) mit Zurrgurten (26) an fahrzeugfesten Ösen festgelegt sind.

5. Inneneinrichtung nach Anspruch 4, **dadurch gekennzeichnet, dass** Schienen (21) einen rechteckigen Rahmen (21) ausbilden.

6. Inneneinrichtung nach einem oder mehreren der Ansprüche 3 bis 5, **dadurch gekennzeichnet, dass** Schienen (24,25) durch Laschen (23) verbunden sind.

7. Inneneinrichtung nach einem oder mehreren der vorangehenden Ansprüche, **dadurch gekennzeichnet, dass** die Stangen (40,44,45) zumindest endseitig ein Gewinde aufweisen und einseitig mit einer Rippe (41) oder mit einer Rippe (43) und untereinander verschraubt sind.

8. Inneneinrichtung nach Anspruch 7, **dadurch gekennzeichnet, dass** die Stangen (40,44,45) durch Rohre mit zumindest endseitigen Innengewinden ausgebildet sind.

9. Inneneinrichtung nach einem oder mehreren der vorangehenden Ansprüche, **dadurch gekennzeichnet, dass** benachbarte Rippen (5,6; 7-9) gleichartige, jeweils eine Auflage (51,53; 54,55) ausbildende Vorsprünge (48,49; 50,51) aufweisen.

10. Inneneinrichtung nach Anspruch 9, **dadurch gekennzeichnet, dass** die Rippen (7-9) gegenüberliegende, gleichartig ausgebildete Vorsprünge (50,51) aufweisen.

11. Inneneinrichtung nach Anspruch 9 oder 10, **dadurch gekennzeichnet, dass** Vorsprünge (47,51) benachbarter Rippen (6,7) mit fluchtenden Bohrungen (62-64) mit eingebrachten Stäben versehen sind.

12. Inneneinrichtung nach einem oder mehreren der vorangehenden Ansprüche, **dadurch gekennzeichnet, dass** die Rippen (5-9) bis auf Aussparungen (68,69) eine gleiche Außenkontur aufweisen.

13. Inneneinrichtung nach einem oder mehreren der vorangehenden Ansprüche, **dadurch gekennzeichnet, dass** zwischen den Fahrzeugwänden, dem Fahrzeugdach und dem Gestell eine Hülle angeordnet ist.
